# EUROPEAN PATENT SPECIFICATION

(11) **EP 0 863 947 B1**
(45) Date of publication and mention of the grant of the patent: **23.08.2000**
(21) Application number: 96941651.0
(22) Date of filing: 27.11.1996
(51) Int. Cl.: C08L 95/00, C08J 9/30

(54) **BITUMEN COMPOSITIONS AND A PROCESS FOR THEIR PREPARATION**
BITUMENZUSAMMENSETZUNGEN UND VERFAHREN ZU IHRER HERSTELLUNG
COMPOSITIONS DE BITUME ET LEUR PROCEDE DE PREPARATION

(30) Priority: 28.11.1995 EP 95308548; 11.12.1995 EP 95402789
(43) Date of publication of application: 16.09.1998
(73) Proprietor: SHELL INTERNATIONALE RESEARCH MAATSCHAPPIJ B.V., 2596 HR Den Haag (NL)
(72) Inventor: CHION, Jacques, Shell Recherche S.A., F-76530 Grand-Couronne (FR); MORIZUR, Marie-Françoise, Shell Recherche S.A., F-76530 Grand-Couronne (FR)
(74) Representative: Spierenburg, Jan
(86) International application number: EP9605365
(87) International publication number: WO9719997

(56) References cited:
- WO-A-94/16019
- US-A- 3 853 798

## Description

The present invention relates to bitumen compositions, a process for their preparation and the use of them in asphalt mixtures for road applications.

Bitumen is used as a binder in road asphalt mixtures, and has developed continually to meet ever-increasing performance demands from roadbuilding. In general bitumen performs well in road asphalt, but increasingly heavy traffic loads have led to the premature wear of many roads through rutting and cracking of the surface. Cracking is a serious defect in an asphalt road because it allows water to reach lower layers of the road surface where it causes rapid deterioration, and accelerates the need for premature repairs. Increasing the bitumen content of asphalt or using a softer grade of bitumen improves the crack resistance of asphalt at low temperatures but increases the risk of excessive rutting at higher temperatures because the mixture is effectively softer. Conversely, resistance of rutting can be improved by reducing the amount of bitumen in the asphalt mixture or by using a harder grade of bitumen, at the expense of crack resistance because the mixture becomes less flexible.

In view of the above it will be clear that it would be very advantageous to develop a hard bitumen composition meeting today's crack resistance requirement, i.e. a bitumen composition having both a good low temperature performance and a good high temperature rutting resistance.

It is known that the low temperature properties of bitumens can be improved by blending them with a polymer. However, when this modification is applied to hard bitumens, an incompatibility between the bitumen and the polymer is generally observed, resulting in hardly or not improved low temperature properties and a relatively poor ageing behaviour.

It is further known from WO 94/16019 to prepare industrial and roofing-grade bitumens by subjecting a bitumen/polymer mixture to a conventional blowing process. These bitumen compositions, however, appear to be not suitable for road applications, due to their high softening point and relatively high penetration.

Object of the present invention is to provide a bitumen composition suitable for road applications having both a good low temperature performance and a good high temperature rutting resistance, and in addition an improved ageing behaviour.

Surprisingly, it has now been found that such bitumen composition can be prepared by subjecting a particular bitumen mixture to a blowing process.

Accordingly, the present invention relates to a process for preparing a bitumen composition for use in an asphalt mixture for road applications comprising blowing a mixture with an oxygen-containing gas which mixture comprises a bitumen having a penetration of less than 300 dmm (as measured by ASTM D 5 at 25°C) and a thermoplastic rubber which is present in an amount of less than 3 %w, based on total mixture.

Suitably, the thermoplastic rubber is present in an amount of less than 3 %w, preferably in the range of from 1 to 3 %w, based on total mixture.

The bitumen applied in the present process has a penetration of less than 300 dmm (as measured by ASTM D 5 at 25°C).

Suitably, the bitumen has a penetration of less than 250 dmm, preferably less than 200 dmm (as measured by ASTM D 5 at 25°C).

The blowing is carried out with an oxygen-containing gas, such as air or pure oxygen. Preferably, use is made of air.

Suitably, the present process is carried out at a temperature in the range of from 200 to 280°C.

Preferably, the process according to the present invention is carried out at a temperature in the range of from 210 to 260°C, more preferably of from 230 to 250°C.

The process according to the present invention may be carried out at ambient pressure or elevated pressure. Normally, however, it will be carried out at ambient pressure.

Suitably, the present process is carried out over a period of time of less than 4 hours, preferably less than 3 hours, more preferably less than 2.5 hours.

The mixture comprises a thermoplastic rubber. The mixture may comprise one or more different types of thermoplastic rubbers. Preferably, however, use is made of only one type of thermoplastic rubber.

Although a wide range of thermoplastic rubbers can suitably be used in accordance with the present invention, the preferred thermoplastic rubbers comprise optionally hydrogenated block copolymers which comprise at least two terminal poly(monovinylaromatic hydrocarbon) blocks and at least one central poly (conjugated diene) block.

Preferably block copolymer constituents are selected from the group consisting of those of the formulae A(BA)ₘ or (AB)ₙ X, wherein A represents a block of poly(monovinylaromatic hydrocarbon) and up to 10% of co-monomer, and wherein B represents a block of poly(conjugated diene) and up to 10% of other co-monomer, wherein X represents the residue of a multivalent coupling agent and wherein n represents an integer ≥ 1, preferably ≥ 2, and m represents an integer ≥ 1, preferably m is 1.

More preferably the blocks A represent poly(styrene) blocks and up to 10% of other co-monomer and the B blocks represent poly(butadiene) or poly(isoprene) and up to 10% of other co-monomer. Multivalent coupling agents to be used include those commonly known in the art.

The respective blocks A and B may be mainly derived from monovinyl aromatic hydrocarbon monomer and conjugated diene monomer, which monomers may be mixed with other structurally related or non-related comonomers, e.g. mono-vinyl aromatic hydrocarbon monomer as main component and small amounts (up to 10%) of other monomers or butadiene mixed with isoprene or with small amounts of styrene.

More preferably the copolymers contain pure poly(styrene), pure poly(isoprene) or pure poly(butadiene) blocks, of which the poly(isoprene) or poly(butadiene) blocks may be selectively hydrogenated to at most a residual ethylenic unsaturation of 20% and most preferably less than 5%. Most preferably the applied block copolymer has the structure ABA, wherein A has an apparent mol wt of from 3000 to 100,000, and preferably from 5,000 to 40,000 and B has an apparent mol wt of from 10,000 to 250,000 and preferably from 40,000 to 200,000. The originally prepared poly(conjugated diene) blocks usually contain from 5 to 50 mol% vinyl groups, originating from 1,2 polymerisation relative to the conjugated diene molecules, and preferably a vinyl content from 10 to 25%.

The complete block copolymer to be used according to the present invention, is normally containing polymerised vinyl aromatic monomers in an amount of from 10 to 60% by weight and preferably from 15 to 45% by weight.

The apparent molecular weight of the total block copolymer will normally be in the range of from 15,000 to 350,000 and preferably in the range of from 40,000 to 250,000.

As examples of suitable pure block copolymers can be mentioned KRATON G-1651, KRATON G-1654, KRATON G-1657, KRATON G 1650, KRATON G-1701, KRATON D-1101, KRATON D-1102, KRATON D-1107, KRATON D-1111, KRATON D-1116, KRATON D-1117, KRATON D-1118, KRATON D-1122, KRATON D-1135X, KRATON D-1184, KRATON D-1144X, KRATON D-1300X, KRATON D-4141, and KRATON D-4158 (KRATON is a trademark).

The bitumen may be a residue from distillation of crude oil, a cracked residue, a residue obtained by blowing a crude oil or residues of crude oil distillation or extracts of crude oils, a bitumen derived from propane bitumen, butane bitumen, pentane bitumen or mixtures thereof. Other suitable bitumens include mixtures of the above bitumens with extenders (fluxes) such as petroleum extracts, e.g. aromatic extracts, distillates or residues.

Suitably, the bitumen applied has a softening point in the range of 35 to 65°C, preferably in the range of 42 to 58 °C (as measured by ASTM D 36).

One of the highly surprising and advantageous aspects of the present process is that now very attractive bitumen compositions can be prepared under mild conditions without requiring the presence of a bitumen blowing catalyst. Thus, the process in accordance with the present invention is suitably carried out in the absence of a bitumen blowing catalyst.

The above-mentioned thermoplastic rubbers are preferably non-vulcanized thermoplastic rubbers. The use of non-vulcanized thermoplastic rubbers in accordance with the present invention has the advantage that attractive bitumen compositions can be prepared without requiring the presence of a vulcanizing agent. Therefore, the present process can suitably be carried out in the absence of a vulcanizing agent.

As will be understood by the skilled person, the mixture of bitumen and the thermoplastic rubber is preheated before being subjected to the blowing process. The mixture of bitumen and the thermoplastic rubber is normally preheated in a such way to establish an initial mixture temperature in the range of from 160 to 220°C.

The present invention further provides a bitumen composition obtainable by any of the processes described herein before. Such bitumen composition has suitably a penetration of less than 100 dmm, preferably less than 75 dmm (as measured by ASTM D 5 at 25°C), and a softening point in the range of from 60 to 90°C, preferably in the range of from 65 to 75°C (as measured by ASTM D 36), and contains less than 3 %w, preferably 1 to 3 %w of any one of the before-mentioned thermoplastic rubbers, based on total bitumen composition. Such bitumen composition is very attractive since it displays both a good low temperature performance and a good high temperature rutting resistance.

Fillers such as carbon black, silica and calcium carbonate, stabilisers, antioxidants, pigments, and solvents are known to be useful in bitumen compositions and can be incorporated in the compositions of this invention in concentrations taught in the art.

The present invention still further relates to the use of a bitumen composition as described herein before in an asphalt mixture for road applications.

The present invention will now be illustrated by means of the following Examples.

### Examples

### Example 1

A mixture was prepared based on a 100 penetration bitumen (as measured by ASTM D 5 at 25°C), an industrially produced non-naphthenic bitumen which is prepared from a crude oil by distillation. The bitumen had a penetration index of 0.5 and a softening point of 44°C (as measured by ASTM D 36). To this bitumen was added 2 %w of a block copolymer, based on total mixture. The block copolymer used was a hydrogenated polystyrene-polybutadiene-polystyrene block copolymer with a 30 %w styrene content and a number average molecular weight of 103,000 as measured by GPC with a polystyrene standard. The ethylenic unsaturation of the polymer had been reduced to less than 1% of the original unsaturation by hydrogenation.

The mixture was prepared by blending the bitumen and the block copolymer at a temperature of 180°C. Subsequently, the preheated mixture so obtained was blown with air in a blowing vessel at a temperature of 220°C during 2 hours. The main properties of the blown bitumen composition are shown in Table 1.

### Example 2

A comparative blowing process was carried out in a similar way as described in Example 1 except that no thermoplastic rubber was added to the bitumen. The main properties of the blown bitumen are shown in Table 1.

The bitumen composition obtained was subjected to the Rolling Thin film Oven Test (ASTM test method D 2572). The main properties of the bitumen composition after this ageing test are shown in the bottom part of Table 1.

### Example 3

A comparative blowing process was carried out in a similar way as described in Example 1 except that the block copolymer was added to the bitumen after the bitumen was blown. The main properties of the blown bitumen composition are shown in Table 1.

### Example 4

A process was carried out in a similar way as described in Example 1 except that 1 %w of the block copolymer was added to the bitumen, based on total mixture. The main properties of the blown bitumen composition are shown in Table 1.

The main properties of the bitumen composition after having been subjected to the RTFOT ageing test are shown in the bottom part of Table 1.

From the results shown in Table 1 it will be clear that with the process according to the present invention (Examples 1 and 4) a hard bitumen composition can be prepared having an attractive low temperature elasticity, as shown by Fraass breaking point (as measured by IP 80), whereas with processes falling outside the present invention (Examples 2 and 3) less attractive hard bitumen products are obtained. Moreover, as will be clear from Examples 2 and 4, the present bitumen composition is more stable against thermal oxidation.

**Table 1**

| Example | 1 | 2 | 3 | 4 |
|---|---|---|---|---|
| **Composition** | | | | |
| thermoplastic rubber (%w) | 2 | 0 | 2 | 1 |

| **Properties after 2 hours blowing at 220°C** | | | | |
|---|---|---|---|---|
| Penetration 25°C (0.1 mm) | 24 | 20 | 16 | 25 |
| Softening Point Ring and Ball (°C) | 67.5 | 65 | 81 | 63 |
| Penetration Index (-) | 0.7 | 0.0 | 1.9 | 0.1 |
| Fraass breaking point (°C) | -13 | -5 | -2 | -10 |

| **Properties after RTFOT ageing** | | | | |
|---|---|---|---|---|
| Penetration 25°C (0.1 mm) | | 16 | | 21 |
| Retained Penetration (%) | | 80 | | 84 |
| Softening Point Ring and ball (°C) | | 72 | | 65.5 |
| Softening Point increase (°C) | | 7 | | 2.5 |
| Penetration Index (-) | | 0.7 | | 0.2 |
| Fraass breaking point (°C) | | -3 | | -7 |

## Claims

1. Process for preparing a bitumen composition for use in an asphalt mixture for road applications comprising blowing a mixture with an oxygen-containing gas which mixture comprises a bitumen having a penetration of less than 300 dmm (as measured by ASTM D 5 at 25°C) and a thermoplastic rubber which is present in an amount of less than 3 %w, based on total mixture.

2. Process according to claim 1, wherein the mixture is blown with air.

3. Process according to claim 1 or 2, wherein a temperature is applied in the range of from 210 to 260°C.

4. Process according to any one claims 1-3, wherein the thermoplastic rubber comprises an optionally hydrogenated block copolymer which comprises at least two terminal poly(monovinylaromatic hydrocarbon) blocks and at least one central poly(conjugated diene) block.

5. Process according to claim 4, wherein the block copolymer has the formulae A(BA)ₘ or (AB)ₙX wherein A represents a block of poly(monovinyl-aromatic hydrocarbon) and up to 10% of co-monomer and wherein B represents a block of poly(conjugated diene) and up to 10% of other co-monomer, wherein X represents the residue of a multivalent coupling agent and wherein n is an integer ≥ 1 and m is an integer ≥ 1.

6. Process according to claim 5, wherein the A blocks are blocks of poly(styrene) and up to 10% of other co-monomer and the B blocks are blocks of poly(butadiene) or poly(isoprene) and up to 10% of other co-monomer.

7. Bitumen composition obtainable by a process as defined in any one of claims 1-6.

8. Use of a bitumen composition as defined in claim 7 in an asphalt mixture for road applications.

## Patentansprüche

1. Verfahren zur Herstellung einer Bitumenzusammensetzung zur Anwendung in einem Asphaltgemisch für Straßenbauzwecke, umfassend ein Blasen eines Gemisches mit einem sauerstoffhältigen Gas, welches Gemisch ein Bitumen mit einer Penetration von weniger als 300 dmm (bestimmt gemäß ASTM D 5 bei 25°C) und einen thermoplastischen Kautschuk umfaßt, der in einer Menge von weniger als 3 Gew.-%, bezogen auf Gesamtgemisch, vorliegt.

2. Verfahren nach Anspruch 1, worin das Gemisch mit Luft geblasen wird.

3. Verfahren nach Anspruch 1 oder 2, worin eine Temperatur im Bereich von 210 bis 260°C angelegt wird.

4. Verfahren nach einem der Ansprüche 1 bis 3, worin der thermoplastische Kautschuk ein gegebenenfalls hydriertes Blockcopolymer umfaßt, das wenigstens zwei endständige Poly(monovinylaromatischer Kohlenwasserstoff)blöcke und wenigstens einen zentralen Poly(konjugiertes Dien)block umfaßt.

5. Verfahren nach Anspruch 4, worin das Blockcopolymer die Formel A(BA)ₘ oder (AB)ₙX aufweist, worin A einen Block aus Poly(monovinylaromatischer Kohlenwasserstoff) mit bis zu 10% Comonomer darstellt und worin B einen Block aus Poly(konjugiertes Dien) und bis zu 10% weiterem Comonomer darstellt, worin X den Rest eines mehrwertigen Kupplungsmittels bedeutet und worin n eine ganze Zahl ≥ 1 ist und m eine ganze Zahl ≥ 1 ist.

6. Verfahren nach Anspruch 5, worin die Blöcke A Blöcke aus Poly(styrol) und bis zu 10% anderem Comonomer sind und die Blöcke B Blöcke aus Poly(butadien) oder Poly(isopren) und bis zu 10% anderem Comonomer sind.

7. Bitumenzusammensetzung, erhältlich nach einem Verfahren, wie in einem der Ansprüche 1 bis 6 definiert.

8. Verwendung einer Bitumenzusammensetzung, wie in Anspruch 7 definiert, in einer Asphaltmischung für Straßenbauzwecke.

## Revendications

1. Procédé de préparation d'une composition bitumineuse utilisable dans un mélange asphaltique pour applications routières comprenant le soufflage d'un mélange avec un gaz contenant de l'oxygène, lequel mélange comprend un bitume ayant une pénétration inférieure à 300 dmm (telle que mesurée par la méthode ASTM D 5 à 25°C) et un caoutchouc thermoplastique qui est présent en une quantité inférieure à 3 % en poids, par rapport au mélange total.

2. Procédé suivant la revendication 1, dans lequel le mélange est soufflé avec de l'air.

3. Procédé suivant l'une ou l'autre des revendications 1 et 2, dans lequel on applique une température allant de 210 à 260°C.

4. Procédé suivant l'une quelconque des revendications 1 à 3, dans lequel le caoutchouc thermoplastique comprend un copolymère bloc éventuellement hydrogéné qui comprend au moins deux blocs de poly(hydrocarbure monovinyl aromatique) terminaux et au moins un bloc de poly(diène conjugué) central.

5. Procédé suivant la revendication 4, dans lequel le copolymère bloc a les formules A(BA)ₘ ou (AB)ₙX, dans lesquelles A représente un bloc de poly(hydrocarbure monovinyl aromatique) et jusqu'à 10 % de comonomère et dans lesquelles B représente un bloc de poly(diène conjugué) et jusqu'à 10 % d'autre comonomère, dans lesquelles X représente le résidu d'un agent de couplage multivalent et dans lesquelles n est un nombre entier ≥ 1 et m est un nombre entier ≥ 1.

6. Procédé suivant la revendication 5, dans lequel les blocs A sont des blocs de poly(styrène) et jusqu'à 10 % d'autre comonomère et les blocs B sont des blocs de poly(butadiène) ou poly(isoprène) et jusqu'à 10 % d'autre comonomère.

7. Composition bitumineuse obtenable par un procédé suivant l'une quelconque des revendications 1 à 6.

8. Utilisation d'une composition bitumineuse suivant la revendication 7 dans un mélange asphaltique pour applications routières.
